Europäisches Patentamt

(19) European Patent Office

Office européen des brevets

(11) Publication number: **0 087 310**

**A1**

(12) **EUROPEAN PATENT APPLICATION**

(21) Application number: **83300898.0**

(22) Date of filing: **21.02.83**

(51) Int. Cl.³: **G 01 G 19/413**
**B 65 B 51/08, B 65 C 5/02**
**B 65 B 57/06**

(30) Priority: **19.02.82 GB 8204939**

(43) Date of publication of application:
**31.08.83 Bulletin 83/35**

(84) Designated Contracting States:
**DE FR IT NL SE**

(71) Applicant: **Jackson, Michael**
**Whitehouse 234 Wareham Road**
**Corfe Mullen Wimborne Dorset BH21 3LW(GB)**

(71) Applicant: **Sivewright, Alan James**
**40 Fairway**
**Merror Guildford Surrey(GB)**

(72) Inventor: **Jackson, Michael**
**Whitehouse 234 Wareham Road**
**Corfe Mullen Wimborne Dorset BH21 3LW(GB)**

(72) Inventor: **Sivewright, Alan James**
**40 Fairway**
**Merror Guildford Surrey(GB)**

(74) Representative: **Williams, John Francis et al,**
**J.F. Williams & Co 34 Tavistock Street**
**London WC2E 7PB(GB)**

(54) Automatic weighing sealing and information producing machine.

㊿ An automatic weighing, sealing and information producing machine comprises holding means (4) for holding a bag or container (6) of articles in the weighing position, weighing means (11) for weighing the bag or container, printing means (21) for printing a label (10) with information derived from the weighing operation, label applying means and sealing means (22 to 29) for sealing the bag or container (6) and applying a label (10) thereto, the bag or container remaining at least substantially in the weighing position during operation of the printing means (21), and the label applying means and sealing means (22 to 29).

FIG 2

**0087310**

## AUTOMATIC WEIGHING SEALING AND INFORMATION PRODUCING MACHINE

This invention relates to an automatic weighing, sealing and information producing machine and is particularly applicable to an automatic machine for weighing loose articles placed in a container whereby the weight and other information is attached to the container and at the same time the container is sealed.

At the present time,there are difficulties in grocery stores where loose articles are to be placed in a bag, for example by (a customer) and payment for the articles and other purchases  is to be made centrally at a checkout.  In the case of the loose articles, for example fruit these are handed to an assistant who then weighs the articles,determines out the price of the articles, seals the bag and marks on the bag the price which is to be charged.  This operation is time consuming requiring the presence of staff for its operation.

In more advanced supermarkets, the problem is even more aggrevated since there are not normally sales staff present around the store and,where loose articles as such are to be sold the customer is required to buy a preset amount which is achieved by pre-packaging the articles prior to display on the shelves.

The present invention seeks to provide an automatic machine which will provide automatic weighing and sealing of containers of loose articles while additionally providing information regarding the articles weighed.

According to the invention there is provided an automatic weighing, sealing and information producing machine characterised in that the machine comprises holding means for holding a bag or container of articles in a weighing position, weighing means for weighing the bag or container of articles thus held, printing means for printing a label with information derived from the weighing operation label applying means for applying the label to the bag or container, and sealing means for sealing the bag or container, the bag or container remaining at least substantially in the weighing position during the operation of the printing, label-applying, and sealing means.

Preferably the bag or container is sealed by means of the printed label.

The invention will now be described in greater detail, by way of example, with reference to the drawings, in which:-

Figure 1 is a perspective view of one form of a machine in accordance with the invention;

Figure 2 is a general view of the mechanical mechanism of the machine shown in Figure 1 with the cover parts removed;

Figures 3a and 3b are plan and side views respectively of a clamping mechanism shown in Figure 2, the plan view of Figure 3a being taken on the line A-A of Figure 3b;

Figure 4a,4b and 4e are representation of the bag sealing and labelling mechanism showing three stages of its operation; and

Figure 5 is a block diagram of the control apparatus of the mechanism;

Figure 6 is a general view of the mechanical mechanism of a second embodiment of a machine in accordance with the invention; and

Figure 7 is a plan view of part of the mechanism shown in figure 6.

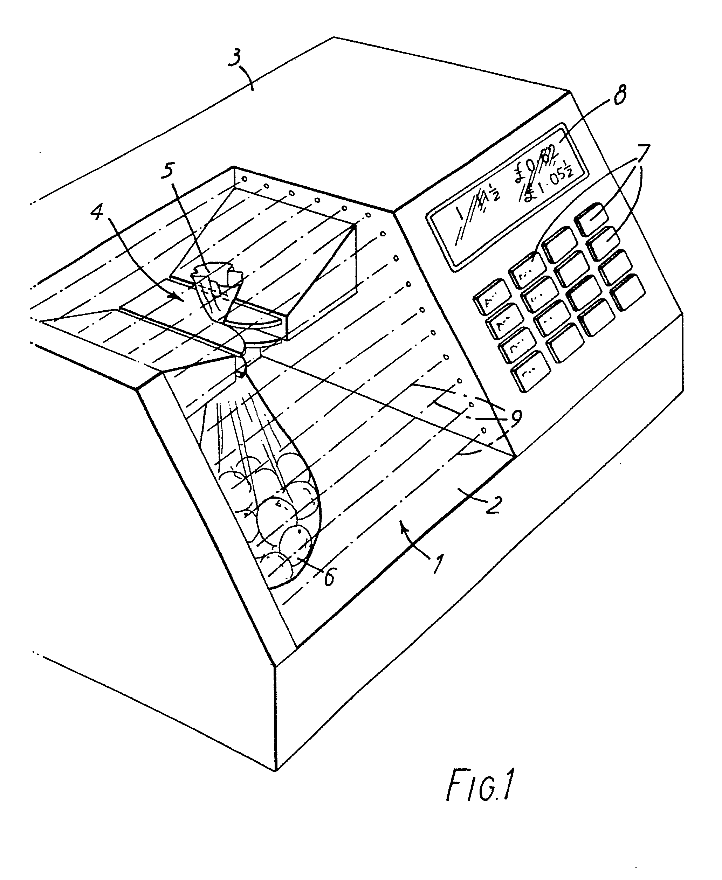

The machine shown in Figure 1 is intended for use by customers in a supermarket where the customer can pick up a number of articles of the same nature for,example apples or pears, and place then in a flexible transparent bag, the fruit then being paid for at the checkout of the store. In order to assist the checkout in determining the price of the goods concerned, the customer places the bag into the weighing machine in accordance with the instructions displayed, indicates to the machine what the articles in the bag are and the machine will then seal the bag and provide a label on the bag indicating for example the weight the type of goods the price per lb and the amount to be paid.

To this end the machine shown in Figure 1 comprises a weighing area 1 to which access is had by means of an opening 2 in the casing 3. Within this weighing area there is a clamping mechanism 4 into which the neck 5 of the bag 6 to be weighed is inserted. The bag may be of any suitable material but transparent plastics are recommended, such as polythene. On the front of the casing,adjacent to the weighing area 1, there is provided a number of operating buttons 7 which,in the example shown,indicate the produce which the customer has placed in the bag and which he presses when weighing his articles. Above the buttons 7 is a display 8 which displays the actual weight of the articles the price per unit of the articles in this case pounds and beneath that there is provided a total price. In operation of the mechanism any desired part of this information is printed onto a label which is used for sealing the bag while it is in the clamp 4 of the machine. Once the weighing has been completed, the bag 6 is released sufficiently to be removed from the clamping mechanism 4.The opening 2, providing access to the weighing area,is covered by a network of light beams 9 which cooperate with photocells to indicate when the weighing area access is obstructed and prevents the weighing from taking place during such an occurrence.

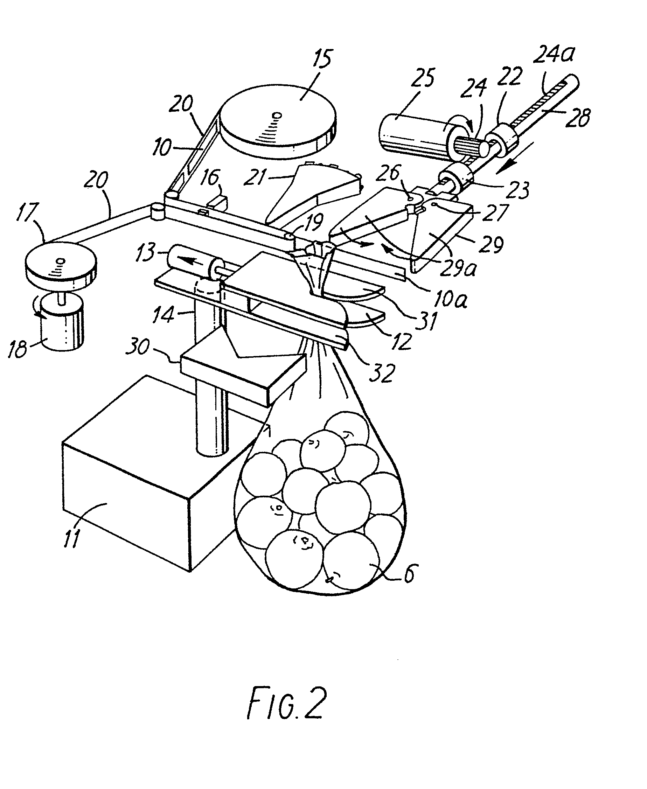

Referring now to Figure 2, the details of the mechanism are shown. Thus an electronic weigh scale 11 supports a clamp 12 operated by a solenoid 13 on a column 14.

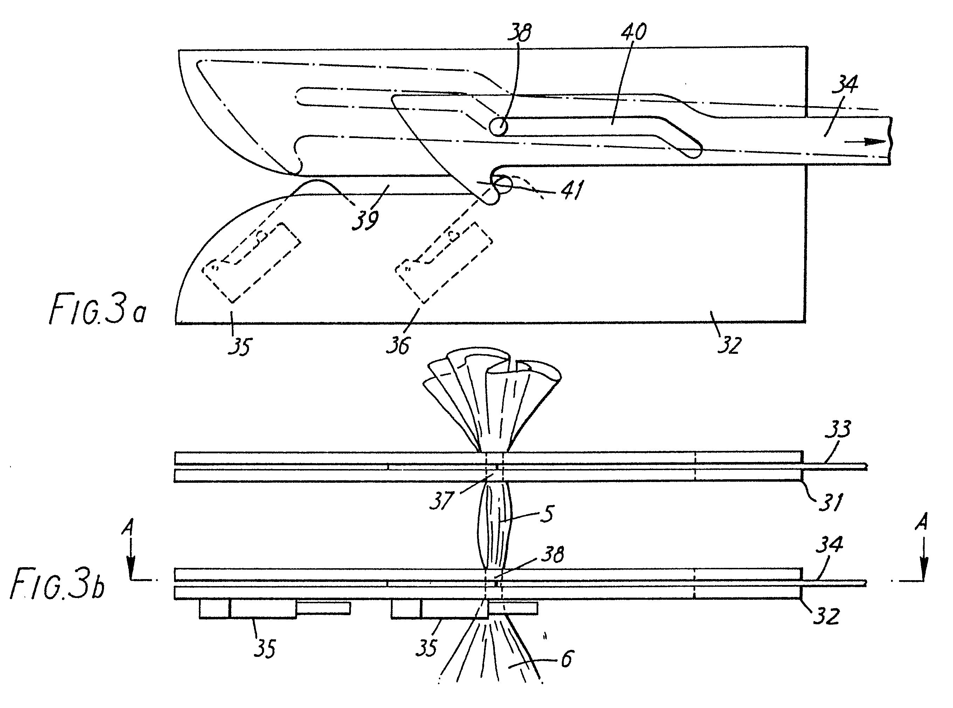

Operation of the clamp 12 is shown in Figures 3a and b. The clamp 12 consists of upper and lower pairs of arms 31,32 each equipped with a retaining arm 33,34 and

0087310

operated by the solenoid 13(Fig 2). Only the lower arm is shown in Figure 3a. As can be seen, the arms are in pairs with the retaining arm located between them. Each arm has a centrally located clamp slot 39.In the normal rest position of the retaining arms 33,34 shown in the dotted lines in Figure 3a is access to the clamp is unobstructed. As a bag 6 is inserted, its initial entry is detected by a micro switch 35. A further micro switch 36 detects the arrival of the bag 6 at the far end of the clamp slot 39 i.e. in a position in which sealing and weighing will take place. The length of the slot 39 is such that when the bag 6 is pressed into the far end of the clamp slot 39 , it will be clear of the first micro switch 35.

The full insertion of the bag 6 is detected,as stated,by the micro switch 36 which,through an electronic controller, energises the clamp solenoid 13 in response thereto. The retaining arms 33,34 are pulled from their rest position into their clamp position,as shown in full lines in Figure 3a. To this end, pins 37,38 engaged in a cam slot 40 in the retaining arms 33,34 cause the hook ends 4 of the arms 33,34 to enter the area of the slot 39 as the arms 33,34 are pulled by the solenoid 13 so that the bag 6 is gathered up and gripped against the end of the slot 39 by the retaining arms 33,34 when the solenoid 13 is at the end of its travel (see particularly Figure 3b). At this stage the bag is clamped in a convenient position for weighing and sealing. Assuming that the weighing area access is unobstructed, weighing will now take place.

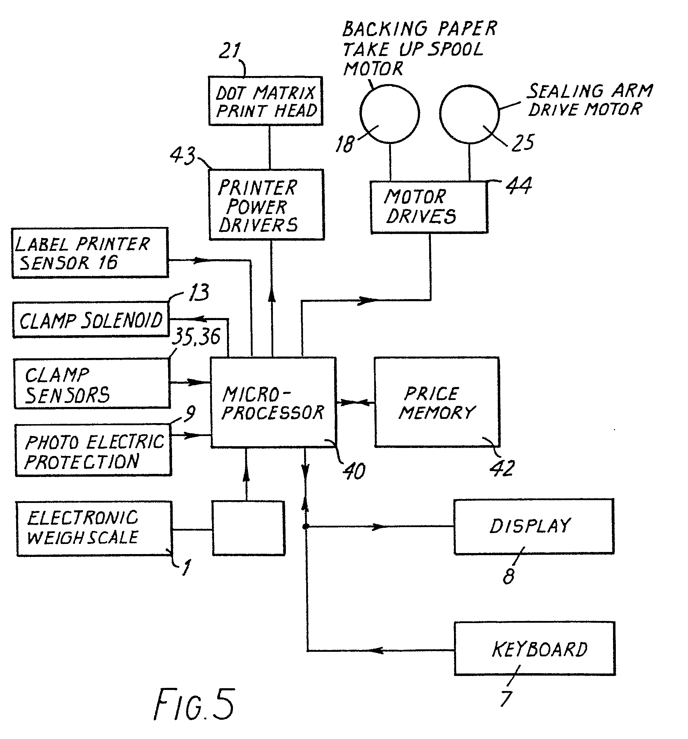

After a short period required for the electronic weigh scale to stabilise, the measured weight is transmitted to the micro processor in accordance with the circuit diagram of Figure 5 (to be described). In the microprocessor the weight is multiplied by the price per unit weight appropriate to the goods being packed and from this the total price of the articles is calculated.

A description of the goods and price can then be printed by a dot matrix print head 21 shown in Figure 2 onto a self adhesive' label 10 as the label is pulled by a backing tape 20 passed the print head 21. A reel of standard self-adhesive label stock 15 provides a continuous supply of labels mounted on a backing tape. The backing tape 20 is fed, after the print head 21 to a take up reel 17, the tape being driven by a motor 18 connected to drive the take up reel 17. A small diameter pulley 19 is so placed that, as the backing tape is wound onto the spool 17 , the greater stiffness of the label 10 will cause it to leave the backing tape 20 and to project out into the area between a sealing arm 29 and the clamp 12.

The backing tape 20 is translucent so as to permit a photosensor 16 to detect the position of the label 10. The control electronics will continue to wind the backing tape 20 until the photosensor 16 detects that the label 10 is just held in place by a small area of contact with the backing tape. At this late stage the label now indicated as 10a, , which has been printed with a description of the price and goods by the printing head 21, extend at right angles to the clamped neck 5 of the bag 6. The label 10a is now ready for use in sealing the bag 6. The sealing arm 29 comprises a pair of spring loaded jaws 29a pivoted on pins 26 mounted at the end of a shaft 28 which is slidable horizontally in two bearings 22 and 23 so that it may pass between the upper and lower arms 31 and 32 of the clamp 12 . The shaft 28 is driven by means of a pinion 24 engageing with the teeth of a rack 24a on the shaft 28. The pinion 24 is driven by a motor 25 under control of the electronic control system.

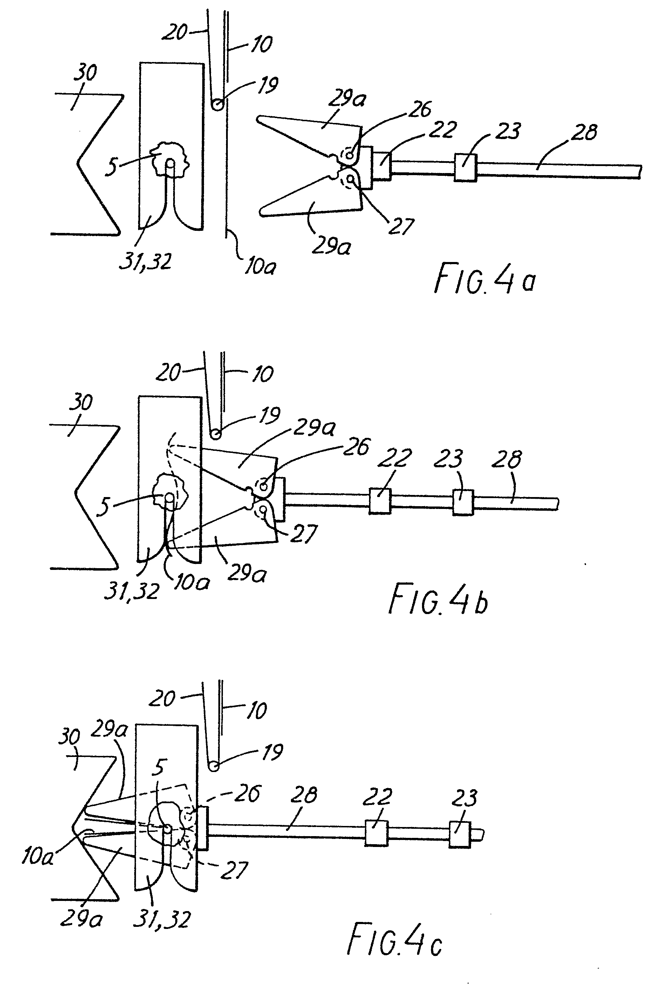

The sealing operation is best seen in Figures 4a,b and c which show the sequence of events when the sealing arm 29 is driven through the clamp 12. In Figure 4a, the label 10a is held between the clamp 12 and the jaws 29a of the sealing arm 29 prior to the forward movement of the sealing arm 29. In Figure 4b, the arm 29 has moved forward to an extent that it picks up the label 10a from its original position on the backup sheet 20 and moves the label 10a which it has picked up against the bag neck 5 waiting to be sealed in the clamp 12. A further movement of the arm 29 will cause the jaws 29a of the sealing arm to engage a V-shaped guide 30 causing the jaws 29a to come together as shown in Figure 4c. Thus the bag 6 is sealed with the middle portion of the label 10a the side portions of the label being pushed together by the jaws 29a so as to engage each other and provide a label sticking out from the neck of the bag. Once the jaws 29a of the sealing arms 29 have met, the sealing arm drive motor is reversed under the control of the control electronics so that as the jaws 29a disengage from the V-guide 30 they spring apart. Thus, as the arm 29 is withdrawn, the jaws can pass the sealed bag 6 without difficulty.

8    0087310

Once the sealing arm 29 has returned to its rest position, the current energising the clamp solenoid 13 is reduced so that, while it is sufficient to hold the bag 6 in position, it permits the user to pull the bag 6 free to a certain extent.    As the user pulls the bag free, the inner limit microswitch 36 is released causing the electronic controller to shut off the current to the clamp solenoid 13 release the bag 6 entirely.

Figure 5 shows the 'electronic controller whose device is a microprocessor 40.    The microprocessors operations are controlled by a number of sensors which include the label printer sensor 16 which indicates when a label is in a position to be printed, clamp sensors 35,36 indicating the required position of the bag and obstruction of access sensors 9 which cause the weighing operation to be shut down if access is obstructed for example by somebody trying to make the scales weigh less than the actual weight of the articles concerned.    Also providing an input control is the electronic weigh scale 1 itself and a price memory 42 in which is stored the details of the prices of the various articles which may be weighed.    In response to this information the microprocessor 40 controls the clamp solenoid 13 the printer power drive 43 and the dot matrix head 21 and it also controls motor drives 44 for the label feed motor 18 and the sealing arm drive motor 25 and the display.    Further information is placed in the microprocessors by means of the keyboard 7 and the microprocessor effects access to the price memory when it is necessary to change the prices.

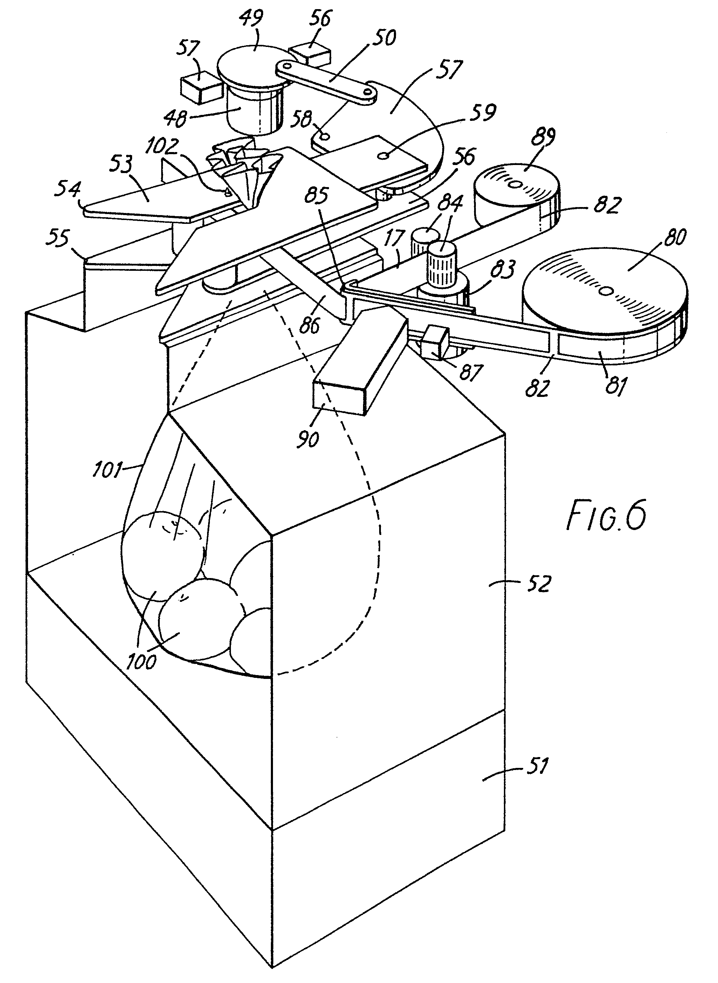

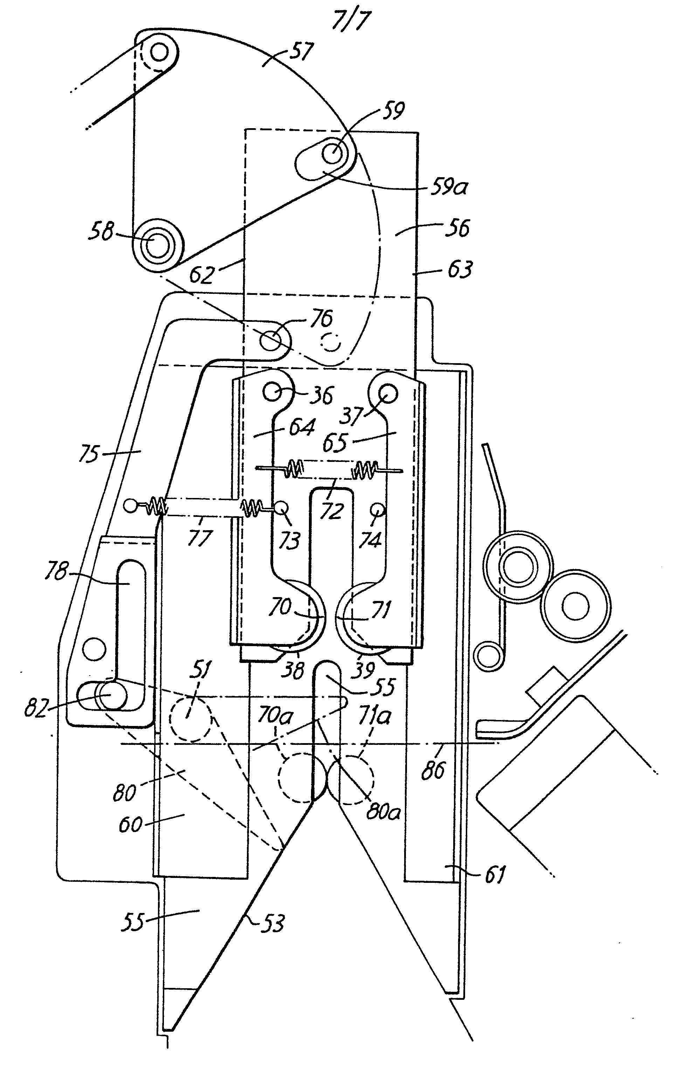

In a second embodiment of the invention, shown in figures 6 and 7, the machine works on a modified mechanism.

In this embodiment, the weighing area of the machine is enclosed in a casing 52, which casing carries a bag holding arrangement 53 and sits on an electronic weighscale 51. The bag holding mechanism comprises upper and lower arms 54 and 55 similar to the arms 31,32 in Figure 2. However, in this embodiment, no clamping arrangements are needed since the bottom of the bag can sit on the floor of the casing 52 without detriment to the weighing process.

The fact that no clamping is required enables the space between the arms 54 and 55 to be utilized for other purposes, as will be hereafter described. Additionally, attempts to tamper with the weight of the articles in the bag will be virtually impossible since such tampering can be detected by the weighing device itself in view of the casing arrangements provided. For this reason, detection means are only necessary to detect access to the holding mechanism.

In the present embodiment, the sealing and labelling mechanisms are situated between the arms 54 and 55. Figure 7 shows the sealing mechanism with the top arm 54 removed for clarity.

Slides 60 and 61 are mounted on the lower arm 55 and provide a running track for a carriage 56 which enages the slides 60 and 61 with flanges 62 and 63 respectively. Similar slides and flanges (not shown) are associated with the upper arm 54. Mounted on the carriage 56 are two arms 64 and 65 which are pivoted on pins 66 and 67 respectively and which are biassed

10 0087310

together by a spring 72. Rollers 70 and 71 are provided
on the ends of the arms 64 and 65. Location for the
arms 64,65 in their closed position, as shown is
provided by pins 73 and 74.

One arm 75 (of a pair of arms, only one of which is
shown) is pivoted to the cariage 56 on a pivot 76 and
is held against the side of the lower arm 55 by a
spring 77. It carries a plate with an L shaped aperture
78. This aperture 78 engages a pin 82 on a clamping arm
80 and is movable, on forward movement of the carriage
56 from the position shown to a clamping position 80a
to be described.

The carriage 56 carries a pin 59 which engages in an
aperture 59a in a crank 57, movement of the crank about
a pivot 58 providing re-aprocation of the carriage 56.
The crank 57 is in turn driven through an arm 50
attached to a cam 49. The cam 49 is driven by a motor
48 and its position is detected by limit switches 46
and 47. As can be seen, the aperture 59a is larger than
the pin and control of the arm 49 is such that at the
end of a rearward stroke of the carriage 56, the pin 59
is completely free in the aperture. In this way, no
stationary connection is provided with the weighing
mechanism at the time that a weighing operation is to
be performed and thus the operating mechanism will
have no effect on the weighing operation.

The labelling mechanism which is also different to that
of the first embodiment will now be described. The
labels 81 are provided on a reel 80, the labels being
mounted on a transparent backing tape 82. The labels
are fed forward at the required moment by a drive motor
83 by means of pinch rollers 84. The strip of labels passes around guide 85 with a sufficiently narrow radius that the labels 81 being stiffer than the backing tape 82 are stripped off and fed into the sealing mechanism as indicated at 86. A sensor 87 is provided for sensing the label position so as to ensure that it is held by one edge until removed by the sealing mechanism. The tape 82 is finally wound on to a take up spool 89. Printing means 90 e.g. a dot matrix printing head, is provided for printing the label prior to its being stripped from the tape.

The operation of the second embodiment will now be described.

After a customer has placed the articles 100 which he wishes to buy in a bag 101 provided for this purpose, the bag is inserted into the slots in the arms 54 and 55. These slots hold the neck 102 of the bag 101 in position. If the bag rests on the base of the casing 52, this will not effect the weighing since the casing in this embodiment is part of the weighing mechanism. The weighing mechanism is then allowed to settle. The weight is then determined and all necessary calculations are performed, the customer having indicated his purchase by pressing appropriate buttons (not shown) in the same way as in the first embodiment.

On completion of the weighing, the sealing mechanism is actuated. To this end the carraiage 56 is moved forwards. During its initial movement, it moves the clamping arm 80 across the slot (into the chain dotted position 80a in figure 7) to hold the neck of the bag while sealing takes place. Further movement of the carriage 56 takes the rollers 70 and 71 forwardly past

the neck of the bag to a position (70a,71a) ready to receive a label. At this point, the label strip 81 is moving forward and is printed with the relevant details by the printer 90. Once the rollers 70,71 are free of the label path, the label 81 is stripped off the tape, as explained previously. This will position the label in front of the neck of the bag and behind the rollers (as indicated at 86 in fig.7).

The carriage 56 then moves back, causing the rollers 70,71 to pick up the label 86 and engage it with the bag neck. As the rollers 70,71 pass the neck, they will bend the label 86 around the neck and adhere it together behind the bag. Final securing of the label is carried out as the customer removes the bag, the still unsecured ends of the label 86 being pulled through between the rollers 70,71.

In the return movement, the crank driving the carriage 56 is driven past its end position so as to free the pin 59 of the carriage ready for the next weighing operation.

The control circuit shown in figure 5 will suitably operate this embodiment also, when suitably modified to take account of the different mechanism. An outer casing similar to that shown in figure 1 may be used.

While the above described arrangements have been of automatic type such as can be operated by customers in a supermarket, nevertheless, other versions of the apparatus can be used for semi-automatic operation by shop assistants. In this way, with the machine, the shop assistant can bag up the articles which the customer has bought, place them on the weigh scale which will provide information not only on the display device but also on the label securing the bag .

It will be appreciated that various modifications may be made to above described embodiment without departing from the scope of the invention. For example the information which is displayed on the ticket or label sealing the bag and that displayed on the device itself may be varied according to circumstances. It is possible, for example, to display only the actual total price or, additionally to the display as shown in Figure 1, to display the type of article being weighed in accordance with the information received by operation of the press buttons. In this way, if payment is not to be made at the point of selection, then the checkout can keep a close watch on the operation by determining whether the goods specified on the label correspond to those in the bag.

Where the apparatus is used in a store having partial supermarket type operation, i.e. with counter staff for certain of the counters but paying at a single checkout, the information provided on the display may be duplicated on a display on the otherside of the apparatus casing so that the information is available both to the shop assistant and to the customer. While visually readable printing can be provided on the label, optically readable information strips may be provided and these may be printed onto the labels by the machine if provided with a suitable printing head. This particular application is very desirable in modern techniques since there is increasingly the desire to have automatic insertion of price details into the checkout mechanisms, thus avoiding the possibility of human error in checkout entries. This avoids the necessity for an assistant to read the details of the price from the package and to insert this by hand into the calculating mechanism at the checkout.

Different forms of apparatus could be used where instead of placing the articles into a bag, the articles could be placed in a box which for example has its mouth sealed by an adhesive tape and onto which the adhesive label may be stuck. In this case, the form of clamp provided in the above described first embodiment would not be used, a weighing platform having centralisation means for centering or otherwise aligning the box in a position for appropriate sealing and labelling being used instead. Additional facilities may be provided on the machine particularly during changeover to metric weights and measures, in which the prices and weights in both systems could be employed and displayed.

The photoelectric arrangement for preventing tampering with the weighing operation may be replaced by a hinged cover or doors which the operator has to shut before weighing can begin.

Sealing may take place by other means than the label itself such as by stapling or heat sealing.

It will be seen that the above embodiments provide an automatic weighing, sealing and printing mechanism which enables the purchase of a number of articles of the same kind in a supermarket without the necessity of prepackaging specific numbers or weights of the articles together and without the necssity of providing staff on hand for the purpose of serving these

15                                    0087310

articles.

## Claims

1. An automatic weighing, sealing and information producing machine comprising holding means (4,53) for holding a bag or container (6,101) of articles in a weighing position, weighing means (11,51) for weighing the bag or container (6,101) of articles thus held, printing means (21,90) for printing a label (10,81) with information derived from the weighing operation, label-applying means 22,26,29 and 56 for applying the label to the bag or container (6,101), and sealing means (22 to 29 and 56) for sealing the bag or container (6,101), the bag or container (6,101) remaining at least substantially in the weighing position during the operation of the printing, label-applying, and sealing means.

2. A machine as claimed in claim 1, wherein the sealing means (22 to 29,56) is arranged to seal the bag or container (6,101) by use of the printed label (10,81).

3. A machine as claimed in any preceding claim, wherein interlock means, actuated by one or more detection means, is provided to prevent weighing of the bag or container by the weighing means if access to the holding means is maintained or attempted by a user.

4. A machine as claimed in claim 3 wherein the detection means include an array of photocells (9).

5. A machine as claimed in claim 3 or 4, wherein the detection means detect fluctuation of the weighing means (51).

6. A machine as claimed in any preceding claim including a keyboard (7) enabling the entering of data concerning the articles being weighed and/or the price per unit weight. -

7. A machine as claimed in any preceding claim, wherein, with a flexible bag (6) as the bag or container, the holding means comprises a clamp device (34) in which the neck of the bag (6) is to be inserted, the clamp device (34) being such that, when the neck of the bag is inserted into the clamp device, the latter will hold the bag in the weighing position.

8. A machine as claimed in any one of claims 1 to 6, wherein, with a flexible bag (101) as the bag or container the holding means comprises a slot in an arm (54 or 55) the slot being of such dimensions as to grip the neck of bag (101) when it is inserted therein.

9. A machine as claimed in claim 7 or 8, wherein the sealing means comprise means (29,70,71) for picking up a label (10,81) from a backing tape (20,82) and for wrapping the label around the neck of the bag.

10. A machine as claimed in claim 9, wherein the sealing means (29) comprises a pair of pincer like arms (29a)which pick up a label (10) across their points, the arms (29a) moving forward on either side of the neck of the bag (6) to engage the label (10) with the neck and fold it thereabout  so that the ends of the label (10) extend in the same general direction, the arms (29a) coming-together to adhere the ends of the label (10) together.

11. A machine as claimed in claim 9, wherein the sealing means comprise a pair of rollers (70,71) biassed towards each other which pick up a label (81) inserted between the rollers (70,71) and the neck of the bag, the  rollers (70,70) moving towards the neck of the bag to engage the label (81) on the neck of the bag and passing to each side of the neck of the bag so as to fold the label (81) around the neck of the bag so that the ends of the label extend in substantially the same direction,  further movement of the rollers (70,71) past the neck of the bag adhering at least parts of the ends of the label (81) together.

FIG.1

FIG.2

FIG.3a

38 40 34

39 41

35 36 32

FIG.3b

33

31

37 5

A A

38

34

35 35 32

6

0087310

0087310

FIG.4a

FIG.4b

FIG.4c

FIG.5

0087310

FIG.6

European Patent
Office

**EUROPEAN SEARCH REPORT**

**0087310**
Application number

EP  83 30 0898

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-2 076 549  (TERAOKA SEIKOSHO CO.) <br> * Claims 1,2,17-26; page 11, lines 110-120 * | 1,3,4-6 | G 01 G  19/413 <br> B 65 B  51/08 <br> B 65 C   5/02 <br> B 65 B  57/06 |
| Y | DE-A-1 461 945  (H. JÄRUND) <br><br> * Claims 1-2; pages 6,7 * | 1,2,7-9 | |
| A | US-A-4 101 366   (K. TERAOKA et al.) | | |
| A | DE-A-2 356 053 (OPTIMA-MASCHINENFABRIK DR. BÜHLER KG.) | | |
| A | DE-A-1 786 506  (D.B.M. S.R.L. DI-DELLA BELLA ITALO) | | **TECHNICAL FIELDS SEARCHED (Int. Cl. 3)** |
| A | FR-A-1 215 076  (LES SUCCESSEURS DE B. TRAYVOU) | | G 01 G <br> B 65 B <br> B 65 C |

The present search report has been drawn up for all claims

| Place of search THE HAGUE | Date of completion of the search 25-05-1983 | Examiner VITZTHUM N.A. |
|---|---|---|